# FASCICULE DE BREVET EUROPEEN

(11) **EP 1 362 785 B1**
(45) Date de publication et mention de la délivrance du brevet: **29.06.2005**
(21) Numéro de dépôt: 03290867.5
(22) Date de dépôt: 08.04.2003
(51) Int. Cl.: B64G 1/36, B64G 1/54, G01S 3/786, G01C 21/02

(54) **Procédé de prevention des effets des protons d'origine solaire permettant une reconfiguration d'un senseur d'étoile et système de contrôle d'attitude mettant en oeuvre le procédé**
Verfahren zur Verhinderung der Wirkung von Solarprotonen, das eine Rekonfiguration eines Sternensensors ermöglicht und Lageregelungssystem mit Anwendung dieses Verfahrens
Method of preventing the effects of solar protons permitting the reconfiguration of a star sensor and attitude control system applying said method

(30) Priorité: 16.05.2002 FR 0206036
(43) Date de publication de la demande: 19.11.2003
(73) Titulaire: ALCATEL, 75008 Paris (FR)
(72) Inventeur: Renault, Hervé, 06400 Cannes (FR)
(74) Mandataire: Smith, Bradford Lee

(56) Documents cités:
- EP-A- 0 554 080
- EP-A- 1 111 402
- US-B1- 6 304 822
- FLYNN D J, FOWSKI W J, KIA T: "Flight Performance of TOPEX/POSEIDON Star Trackers" PROCEEDINGS OF THE SPIE, vol. 1949, 1993, pages 149-163, XP008013380

## Description

L'invention concerne un procédé de prévention des effets des protons d'origine solaire sur un système de contrôle d'attitude d'un satellite et un système de contrôle d'attitude d'un satellite mettant en oeuvre le procédé.

La connaissance de l'attitude d'un satellite est nécessaire pour piloter les manoeuvres en relation avec la mission qu'il doit remplir.

De manière connue l'attitude d'un satellite peut être déterminée au moyen d'une relation entre les trois axes du satellite et des points de référence tels que des étoiles célestes et ceci au moyen d'un senseur d'étoile installé à bord du stellite.

On s'intéresse ici plus particulièrement aux senseurs dits « 3-axes » et autonomes.

Pour réaliser une mesure 3-axes, ces senseurs doivent traiter les informations de deux étoiles au moins. En pratique plus et typiquement de 5 à 10. Le principe de détection du flux de proton est basé sur le fait qu'il y a au moins N étoiles utilisées pour élaborer la solution d'attitude.

Les senseurs d'étoiles utilisent habituellement un réseau ou matrice de détecteurs à couplage de charge (Charge Coupled Device CCD). Ils comprennent également un système de lentille ou télescope permettant de fournir une image d'une zone de l'espace contenant l'étoile. Un équipement redondant est généralement prévu pour pallier à des pannes de l'équipement nominal.

Le champ de vision d'un senseur d'étoile est déterminé par les dimensions du réseau dans le plan focal du système de lentilles. Un système de coordonnées peut être affecté au champ visuel ou à la surface du réseau de détecteurs, l'origine de ce système de coordonnées étant de préférence au milieu du champ visuel. Connaissant les positions des étoiles vues par rapport aux cordonnées de référence de la fenêtre du senseur et en effectuant une corrélation entre le « motif » d'étoile ainsi obtenu et un catalogue de motifs, on peut obtenir l'attitude du senseur et donc du satellite.

Afin de mieux comprendre la suite, on va tout d'abord rappeler le type de fonctionnement d'un senseur 3-axes :
- le senseur possède un (ou plusieurs) catalogue(s) d'étoile embarqué,
- le senseur est caractérisé par deux modes de fonctionnement principaux :
   a) Mode acquisition : Ce mode permet de déterminer l'attitude du senseur par rapport à un repère inertiel sans connaissance à priori de cette attitude. Cette détermination initiale est obtenue par :
      - Lecture de l'ensemble de la matrice CCD,
      - Détermination de la position des étoiles candidates,
      - Calcul de distance angulaire entre paire d'étoiles candidates,
      - Identification des étoiles candidates par comparaison des distances angulaire calculées par rapport à un catalogue de paires, embarqué,
      - Calcul de l'attitude 3-axes en fonctions des coordonnées des étoiles identifiées.
   b) Mode poursuite : Ce mode permet de calculer finement l'attitude 3-axes en fonction des mesures de positions des étoiles dans le champ de vue. Ce mode suppose une connaissance à priori de l'attitude avec une précision de l'ordre de 0.3 degrés (dépend des senseurs). Cette connaissance a priori est obtenue par extrapolation de la mesure précédente. Il est cependant possible de la fournir par télémétrie. C'est cette dernière caractéristique qui va être exploitée dans ce qui suit.

En mode poursuite l'attitude étant connue a priori il est possible alors de prédire la position des étoiles utilisées et de ne lire que les pixels adjacents.

Lors d'une éruption solaire un flux de protons dépassant de plusieurs ordres de grandeurs les normales habituelles est émis. L'interaction de ces protons avec la matrice CCD d'un senseur d'étoile entraîne un dépôt d'électrons qui peut être interprété comme un signal d'étoile.

Lorsque le senseur d'étoile est en mode poursuite ce phénomène est peu critique car seule une fenêtre de taille réduite autour des étoiles est utilisée dans le traitement minimisant les risques d'interaction.

Par contre en mode acquisition l'intégralité de la matrice CCD est traitée et la présence de fausses étoiles risque de perturber ou de saturer l'algorithme de reconnaissance du motif de présence d'étoile.

Si pendant que se produit une éruption solaire, une reconfiguration de senseur stellaire est déclenchée par la logique FDIR du satellite (FDIR = Failure Detection Isolation and Recovery), alors il y a un risque que la reconfiguration d'un senseur d'étoile redondant soit impossible. La demande de brévet européen EP 1111402 A décrit un système de senseurs stellaires tolérant la radiation.

On rappelle à propos qu'une reconfiguration du senseur peut avoir deux origines :
- Soit la logique FDIR détecte un dysfonctionnement sur le senseur nominal (par traitement de sa télémétrie), le considère en panne et ordonne la reconfiguration sur l'équipement redondant.
- Soit la logique FDIR détecte un problème plus général (erreur d'attitude excessive par exemple) mais dont il n'est pas possible d'isoler la cause simplement, dans ce cas donc, elle ordonne une reconfiguration générale de tout les équipements en fonction à ce moment, y compris le senseur stellaire même s'il fonctionne bien.

L'interruption de mission principale qui s'ensuit pour le satellite sera alors d'une durée correspondant à la durée typique d'une éruption solaire qui est de 48h à 72h. Une telle interruption représente une insécurité inacceptable et des surcoûts importants.

La présente invention permet de résoudre ce problème. Elle permet en effet de ne pas avoir d'interruption de mission même si le senseur d'étoile actif s'arrête pendant une éruption de protons d'origine solaire.

La présente invention a plus particulièrement pour objet un procédé de prévention des effets des protons d'origine solaire permettant une reconfiguration d'un senseur d'étoile, ledit senseur étant apte à fournir des données d'attitude d'un satellite, le procédé comprenant les étapes suivantes :
- détecter l'arrivée d'une éruption de protons d'origine solaire,
- déclencher le fonctionnement en mode poursuite d'un deuxième senseur d'étoile lorsque l'arrivée d'une éruption de protons d'origine solaire a été détectée, de manière à avoir au moins un senseur en fonctionnement pendant la durée de l'éruption solaire.

Selon une autre caractéristique, le fonctionnement en mode poursuite du deuxième senseur est obtenu à partir des données d'attitude fournies par le premier senseur.

La détection comprend les étapes suivantes :
- l'enregistrement du nombre d'étoiles rejetées issu du traitement des données de télémétrie du premier senseur,
- la détermination d'une valeur moyenne de ce nombre sur une durée déterminée afin d'éliminer les fausses alarmes,
- la comparaison de cette valeur moyenne à un seuil prédéterminé,
- le déclenchement du fonctionnement du deuxième senseur lorsque ce seuil est atteint ou dépassé.

Un autre objet de l'invention concerne un système de contrôle d'attitude d'un satellite comprenant au moins deux senseurs d'étoiles à bord du satellite, dont un premier est en fonctionnement, caractérisé en ce que le système comporte :
- des moyens de détection de l'arrivée d'une éruption de protons d'origine solaire, fournissant un signal de commande,
- des moyens de déclenchement du fonctionnement du deuxième senseur d'étoile en mode poursuite à partir des données d'attitude fournies par le premier senseur d'étoile, ces moyens étant activés par ledit signal de commande.

Selon une autre caractéristique, les moyens de détection de l'arrivée d'une éruption solaire comportent des moyens d'enregistrement du nombre d'étoiles rejetées obtenu à partir du traitement des données de télémétrie du senseur d'étoiles en fonctionnement.

Les moyens de détection de l'arrivée d'une éruption de protons d'origine solaire comportent des moyens pour éliminer les fausses alarmes. Avantageusement, ces moyens comportent un filtre passe-bas.

Selon une autre caractéristique, les moyens de détection de l'arrivée d'une éruption de protons d'origine solaire comportent une logique de décision comprenant un seuil prédéterminé maximum au-delà duquel elle provoque le déclenchement du fonctionnement du deuxième senseur d'étoile.

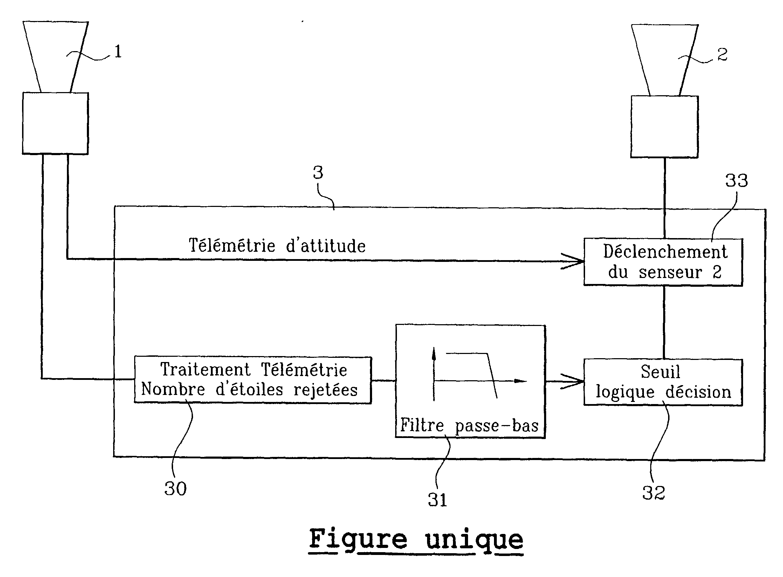

D'autres particularités et avantages de l'invention apparaîtront clairement à la lecture de la description qui est donnée ci-après à titre d'exemple non limitatif et en regard de la figure unique représentant un schéma d'un système de mise en oeuvre du procédé.

Le système proposé comprend la mise en place à bord du satellite d'au moins deux senseurs d'étoiles 1, 2. De façon pratique les systèmes existant prévoient un senseur d'étoile redondant 2 en cas de panne du senseur d'étoile 1 prévu pour réaliser les mesures télémétriques.

Comme on va le voir plus en détail dans la suite, le senseur d'étoile redondant 2 va être utilisé en prévention d'une panne du senseur 1 pouvant survenir en période d'éruption solaire.

Il est pour cela prévu que le senseur redondant 2 soit mis en fonctionnement en mode poursuite c'est à dire calé sur les étoiles servant à déterminer l'attitude du satellite dès que l'arrivée d'une éruption solaire est détectée.

Ainsi les deux équipements c'est à dire le senseur d'étoile 1 prévu pour le contrôle d'attitude du satellite et le senseur redondant 2, seront pendant la période d'éruption solaire, en mode poursuite. De cette façon, si l'un des équipements est momentanément éteint, l'autre reste en mode poursuite et il n'y a pas d'interruption de mission du satellite.

Par conséquent en cas de panne du senseur d'étoile 1 impliquant une reconfiguration, le senseur redondant est déjà en mode poursuite et opérationnel. S'il fallait dans ces conditions effectuer une configuration en mode acquisition pour ce senseur celle-ci serait infructueuse du fait de la saturation provoquée par les protons d'origine solaire.

De manière connue, un système de contrôle d'attitude d'un satellite dans l'espace comprend au moins un senseur d'étoile 1 et un calculateur 3 de contrôle d'attitude. Ces équipements sont représentés sur le schéma de la figure unique.

Pour la mise en oeuvre du procédé et selon un mode préféré de réalisation, les différentes opérations de détection et de déclenchement du fonctionnement du deuxième senseur 2 sont réalisées par le calculateur 3 qui comporte à cette fin une unité de traitement des données de télémétrie 30. Le calculateur 3 comprend en outre une unité 31 apte à éliminer les fausses alarmes, une unité logique de décision 32 et une unité de déclenchement du fonctionnement en mode poursuite du senseur redondant 2.

Dans l'implémentation qui a été faite, c'est à dire dans le cas d'un senseur d'étoile autonome qui intègre dans son propre processeur toutes les fonctions nécessaires et entre autre un algorithme de détermination d'attitude, l'unité de traitement des données de télémétrie 30 reçoit les données de télémétrie du senseur 1, il s'agit de deux valeurs, l'une étant le nombre d'étoile attendu par l'algorithme de télémétrie du senseur et l'autre le nombre d'étoiles effectivement utilisées pour élaborer la solution d'attitude.

En effet, La télémétrie d'un senseur stellaire autonome fournit deux valeurs :
- le nombre d'étoile attendu. En fonction de l'attitude et de la vitesse estimée le logiciel « prédit » le nombre et la position des étoiles.
- le nombre des étoiles effectivement utilisées pour élaborer la solution d'attitude.

L'unité de traitement 30 lit ces deux valeurs dans le flux de données de télémétrie fourni et effectue la différence pour connaître le nombre N d'étoiles rejetées. Cette information est exploitée conformément à l'invention pour détecter l'arrivée d'une éruption solaire. En l'absence d'anomalie de fonctionnement, le nombre N est de l'ordre de zéro. Lorsque le nombre d'étoiles rejetées par l'algorithme est supérieur à N, cela signifie que l'algorithme élimine plus d'étoiles du traitement que ce qui est dans la norme pour un senseur d'étoile donné. Le senseur est donc perturbé par un phénomène physique tel que d'émission de protons d'origine solaire.

On prévoit alors pour améliorer cette mesure, en sortie de l'unité 30, une unité 31 permettant d'établir une valeur moyenne du nombre d'étoiles éliminées en observant les différentes valeurs obtenues sur une durée fixée. Cette opération permet d'éliminer les fausses alarmes. Pour cela, on peut par exemple effectuer une moyenne glissante sur une durée d'une heure.

Selon un mode préféré de réalisation, l'unité 31 est mise en oeuvre au moyen d'un filtrage passe-bas dont la constante de temps correspond à la durée d'observation du nombre d'étoiles rejetées.

Lorsque le seuil Nmax est atteint ou dépassé, une logique de décision 32 active une unité de déclenchement du fonctionnement du senseur redondant 2.

Cette unité 33 reçoit les données d'attitude d'étoile du senseur 1 et est apte à partir de ces données de caler le senseur 2 sur l'étoile de référence. En pratique l'attitude déterminée par le senseur 1 est transformée dans le repère du senseur 2 par cette unité 33.

Les unités 30 à 33 sont de façon pratique des procédures d'un logiciel conçu a cet effet.

Le calculateur et le logiciel que ce calculateur met en oeuvre sont embarqués sur le satellite mais ils peuvent également être au sol sans que cela modifie le principe de l'invention.

En outre dans l'exemple qui est donné, le senseur d'étoile est autonome et comporte comme cela a été dit un processeur avec notamment un logiciel de télémétrie. Le traitement de l'unité 30 consiste à effectuer la différence des deux paramètres cités précédemment, fournis par ce logiciel. Ce traitement complet de télémétrie pourrait bien entendu être effectué par l'unité de traitement 30 dans le cas d'un senseur non autonome c'est-à-dire ne comportant ses propres moyens de mesures de télémétrie. Ceci ne change en rien le principe de l'invention. Dans ce cas l'unité de traitement 30 disposerait directement de l'information nombre d'étoiles rejetées.

## Revendications

1. Procédé de prévention des effets des protons d'origine solaire sur un système de contrôle d'attitude d'un satellite, en permettant une reconfiguration d'un senseur d'étoile (1), ledit senseur (1) étant apte à fournir des données d'attitude d'un satellite dans l'espace, le procédé comprenant les étapes suivantes :
- détecter l'arrivée d'une éruption de protons d'origine solaire,
- déclencher le fonctionnement en mode poursuite d'un deuxième senseur d'étoile (2) lorsque l'arrivée d'une éruption de protons d'origine solaire a été détectée, de manière à avoir au moins un senseur en fonctionnement pendant la durée de l'éruption solaire.

2. Procédé de prévention des effets des protons d'origine solaire selon la revendication 1, **caractérisé en ce que** le fonctionnement en mode poursuite du deuxième senseur (2) est obtenu à partir des données d'attitude fournies par le premier senseur (1).

3. Procédé de prévention des effets des protons d'origine solaire selon la revendication 1, **caractérisé en ce que** la détection comprend les étapes suivantes :
- l'enregistrement du nombre d'étoiles rejetées issu du traitement des données de télémétrie du premier senseur,
- la détermination d'une valeur moyenne de ce nombre sur une durée déterminée afin d'éliminer les fausses alarmes,
- la comparaison de cette valeur moyenne à un seuil prédéterminé,
- le déclenchement du fonctionnement du deuxième senseur lorsque ce seuil est atteint ou dépassé.

4. système de contrôle d'attitude d'un satellite comprenant au moins deux senseurs d'étoiles (1,2) a bord du satellite dont un premier (1) est en fonctionnement, **caractérisé en ce qu'**il comporte :
- des moyens de détection de l'arrivée d'une éruption de protons d'origine solaire, fournissant un signal de commande,
- des moyens de déclenchement (33) du fonctionnement du deuxième senseur d'étoile (2) en mode poursuite à partir des données d'attitude fournies par le premier senseur d'étoile (1), ces moyens étant activés par ledit signal de commande.

5. système de contrôle d'attitude d'un satellite selon la revendication 4, **caractérisé en ce que** les moyens de détection de l'arrivée d'une éruption de protons d'origine solaire comprennent des moyens d'enregistrement (30) du nombre d'étoiles rejetées obtenu à partir du traitement des données de télémétrie du senseur d'étoiles en fonctionnement (1).

6. système de contrôle d'attitude d'un satellite selon les revendications 4 ou 5, **caractérisé en ce que** les moyens de détection de l'arrivée d'une éruption de protons d'origine solaire comportent des moyens (31) pour éliminer les fausses alarmes.

7. système de contrôle d'attitude d'un satellite selon la revendication 6, **caractérisé en ce que** les moyens (31) pour éliminer les fausses alarmes, comportent un filtre passe-bas.

8. système de contrôle d'attitude d'un satellite selon les revendications 4 à 7, **caractérisé en ce que** les moyens de détection de l'arrivée d'une éruption de protons d'origine solaire comportent une unité logique de décision (32) comprenant un seuil prédéterminé maximum au-delà duquel elle provoque le déclenchement du fonctionnement du deuxième senseur d'étoile (2).

## Patentansprüche

1. Verfahren zur Verhinderung der Auswirkungen von Protonen solaren Ursprungs auf ein Satelliten-Lageregelungssystem, bei welchem eine Neukonfiguration eines Sternsensors (1) ermöglicht wird, wobei der besagte Sensor (1) geeignet ist, Daten für die Lage eines Satelliten im Raum zu liefern, wobei das Verfahren die folgenden Schritte beinhaltet:
- Detektieren des Eintreffens einer Protoneneruption solaren Ursprungs,
- Auslösen des Betriebs eines zweiten Sternsensors (2) im Verfolgungsmodus, wenn das Eintreffen einer Protoneneruption solaren Ursprungs detektiert wurde, und zwar so, daß für die Dauer der Sonneneruption mindestens ein Sensor in Betrieb ist.

2. Verfahren zur Verhinderung der Auswirkungen von Protonen solaren Ursprungs gemäß Anspruch 1, **dadurch gekennzeichnet, daß** der Betrieb des zweiten Sensors (2) im Verfolgungsmodus aufgrund von Lagedaten bewerkstelligt wird, die vom ersten Sensor (1) geliefert wurden.

3. Verfahren zur Verhinderung der Auswirkungen von Protonen solaren Ursprungs gemäß Anspruch 1, **dadurch gekennzeichnet, daß** die Detektion die folgenden Schritte beinhaltet:
- Erfassung der Anzahl von zurückgewiesenen Sternen, die von der Telemetriedatenverarbeitung des ersten Sensors ausgegeben wird,
- Ermittlung eines Mittelwertes dieser Anzahl über eine festgelegte Zeitspanne zur Vermeidung von Fehlalarmen,
- Vergleich dieses Mittelwertes mit einem zuvor festgelegten Schwellenwert,
- Auslösen des Betriebs des zweiten Sensors, wenn dieser Schwellenwert erreicht oder überschritten wird.

4. Satelliten-Lageregelungssystem, beinhaltend mindestens zwei Sternsensoren (1, 2) an Bord des Satelliten, von denen ein erster (1) in Betrieb ist, **dadurch gekennzeichnet, daß** das System
- Mittel zur Detektion des Eintreffens einer Protoneneruption solaren Ursprungs, welche ein Steuersignal liefern, und
- Mittel (33) zum Auslösen des Betriebs eines zweiten Sternsensors (2) im Verfolgungsmodus aufgrund von Lagedaten beinhaltet, die vom ersten Sternsensor (1) geliefert werden, wobei diese Mittel von dem besagten Steuersignal aktiviert werden.

5. Satelliten-Lageregelungssystem gemäß Anspruch 4, **dadurch gekennzeichnet, daß** die Mittel zur Detektion des Eintreffens einer Protoneneruption solaren Ursprungs Mittel (30) zur Erfassung der Anzahl der zurückgewiesenen Sterne beinhalten, die aus der Verarbeitung der Telemetriedaten des in Betrieb befindlichen Sternsensors (1) gewonnen wurde.

6. Satelliten-Lageregelungssystem gemäß den Ansprüchen 4 oder 5, **dadurch gekennzeichnet, daß** die Mittel zur Detektion des Eintreffens einer Protoneneruption solaren Ursprungs Mittel (31) zum Ausschließen von Fehlalarmen beinhalten.

7. Satelliten-Lageregelungssystem gemäß Anspruch 6, **dadurch gekennzeichnet, daß** die Mittel (31) zum Ausschließen von Fehlalarmen ein Tiefpaßfilter beinhalten.

8. Satelliten-Lageregelungssystem gemäß den Ansprüchen 4 bis 7, **dadurch gekennzeichnet, daß** die Mittel zur Detektion des Eintreffens einer Protoneneruption solaren Ursprungs eine Entscheidungslogik-Einheit (32) beinhalten, welche einen zuvor festgelegten maximalen Schwellenwert beinhaltet, oberhalb dessen die Logik das Auslösen des Betriebs des zweiten Sternsensors (2) bewirkt.

## Claims

1. A method of providing protection against the effects of solar origin protons on an attitude control system of a satellite, by making it possible for a star sensor (1) to be reconfigured, said sensor (1) being suitable for supplying attitude data of a satellite in space, the method comprising the following steps:
- detecting the arrival of an eruption of solar origin protons; and
- triggering tracking mode operation of a second star sensor (2) when the arrival of an eruption of solar origin protons has been detected, so as to have available at least one sensor in operation during the solar eruption.

2. A method of providing protection against the effects of solar origin protons according to claim 1, **characterized in that** tracking mode operation of the second sensor (2) is obtained from attitude data supplied by the first sensor (1).

3. A method of providing protection against the effects of solar origin protons according to claim 1, **characterized in that** detection comprises the following steps:
- recording the number of stars rejected as obtained by processing the telemetry data of the first sensor;
- determining a mean value for said number over a determined duration in order to eliminate false alarms;
- comparing said mean value with a predetermined threshold; and
- triggering operation of the second sensor when said threshold is reached or exceeded.

4. A system for controlling the attitude of a satellite, having at least two star sensors (1, 2) onboard the satellite, a first sensor (1) being in operation, the system being **characterized in that** it comprises:
- means for detecting the arrival of an eruption of solar origin protons, said means delivering a control signal; and
- means (33) for triggering operation of the second star sensor (2) in tracking mode based on the attitude data provided by the first star sensor (1), said means being activated by said control signal.

5. A system for controlling the attitude of a satellite according to claim 4, **characterized in that** the means for detecting the arrival of an eruption of protons of solar origin comprise means (30) for recording the number of rejected stars as obtained by processing telemetry data from the star sensor (1) in operation.

6. A system for controlling the attitude of a satellite according to claim 4, **characterized in that** the means for detecting the arrival of an eruption of solar origin protons includes means (31) for eliminating false alarms.

7. A system for controlling the attitude of a satellite according to claim 6, **characterized in that** the means (31) for eliminating false alarms comprise a lowpass filter.

8. A system for controlling the attitude of a satellite according to claim 4, **characterized in that** the means for detecting the arrival of an eruption of solar origin protons comprise a decision logic unit (32) having a predetermined maximum threshold beyond which it causes operation of the second star sensor (2) to be triggered.
